# EUROPEAN PATENT APPLICATION

(11) **EP 3 441 268 A1**
(43) Date of publication of application: **13.02.2019**
(21) Application number: 17461582.3
(22) Date of filing: 09.08.2017
(51) Int. Cl.: B60S 1/04, B60S 1/34

(54) **PROTECTIVE CAP FOR VEHICLE WIPER DEVICE AND VEHICLE WIPER DEVICE**

(71) Applicant: Valeo Autosystemy SP. Z.O.O., 32-050 Skawina (PL)
(72) Inventor: JANISZ, Daniel, 32-050 Skawina (PL)
(74) Representative: Valeo Systèmes d'Essuyage

(57) **Abstract**

The present invention relates to a protective cap (1) for a vehicle wiper device (2). The protective cap comprises dissipating means (3) for dissipation of energy during applying external forces to the protective cap. The protective cap is configured to be directly mounted to the extremity (8) of a pivot shaft (4). The invention relates also to a vehicle wiper device comprising such the protective cap.

## Description

### TECHNICAL FIELD OF THE INVENTION

The present invention relates to a protective cap for a vehicle wiper device and to a vehicle wiper device having the protective cap.

Vehicle wiper devices are generally known. A vehicle wiper device comprises a wiper arm provided with a wiper blade for wiping a windscreen of a vehicle, in particular a windscreen of a car. The wiper arm is mounted to a rotatable pivot shaft, such that the wiper arm is capable of performing a reciprocating movement over a windscreen. It should be understood that the invention is not limited to be used with cars but also with trains and other fast vehicles.

### STATE OF THE ART

Vehicle wiper devices are mounted on a vehicle, thus the devices comprise many external parts exposed to the outside of the vehicle. Since the vehicle wiper device is arranged at least partially outside the vehicle and in front of the vehicle, the vehicle wiper device is often a part which contacts with a road user, for example pedestrian, when a road accident occurs. Thus, a safety of a road user during a road accident is an important aspect during designing vehicle wiper devices. Road accidents tests have shown that a part of a vehicle wiper device which is particularly dangerous for road users during a road accident is an end portion of a pivot shaft protruding from the vehicle wiper device. The end portion of the pivot shaft, is typically provided with a threaded nut that can be impacted by a road user during a road accident. In most dangerous case a road user hits with a head into the protruding end portion of the pivot shaft and the nut. Since the end portion of the pivot shaft and the nut are very small in comparison with a head of a road user, hitting it with a large speed during a road accident may lead to deep injuries or even death of a road user.

In order to improve safety of a road user during a road accident, in the prior art a wiper apparatus capable of absorbing impact applied from outside has been provided, as disclosed in US 6 505 376 B1. The known wiper apparatus comprises a rocking wiper arm and a wiper blade attached thereto. The wiper apparatus further comprises a pivot fixed to a base end of the wiper arm and a pivot holder. The pivot holder is attached to the car-body panel through a section having low break strength such that the pivot holder is movable toward inside of a car-body by a load applied from outside of the vehicle.

However, the vehicle wiper device known from the prior art is a mass-depended apparatus capable of absorbing impact. Mass dependency of absorption of impact by the vehicle wiper device means that several components of the vehicle wiper device are being moved during a road accident, e.g. moving of the pivot shaft into the car body and breaking of low break strength sections. In such a solution dissipation of energy depends on a mass of several components which are pushed by a road user impacting these components. Moving of components of the vehicle wiper device causes that an impacting force, which acts on the vehicle wiper device in one direction but also on a road user in the opposite direction is very high. Therefore, a road user may become seriously injured by some external parts of the vehicle wiper device before a predetermined value of the impacting force is reached and damage of components of the vehicle wiper device begins. In addition, the vehicle wiper device capable of absorbing impact comprises many components and is bulky. All of this results in a high complexity of construction of the vehicle wiper device.

There is a need to provide a vehicle wiper device which prevents direct contact of a road user with an end portion of a pivot shaft during a road accident.

Further, there is a need to provide a vehicle wiper device capable of dissipating energy acting on the device during a road accident which has simple construction and is lightweight.

### DISCLOSURE OF THE INVENTION

To fulfill, at least partially, the above mentioned needs, the present invention provides a protective cap for a vehicle wiper device.

A protective cap for a vehicle wiper device according to the present invention comprises dissipating means for dissipation of energy during applying external forces to the protective cap. The protective cap is configured to be directly mounted to the extremity of a pivot shaft.

When a road user hits with a predetermined force into the protective cap, the dissipating means dissipate the energy in order to reduce a force acting on a road user during a road accident. Dissipation of energy by the protective cap does not require moving of the components of the vehicle wiper device. Thus, the force acting on a road user during a road accident is effectively reduced. Moreover, the protective cap prevents a road user from being injured by sharp edges of a protruding end portion of the pivot shaft. Thus, a higher level of security of a road user during a road accident is obtained. It should be also noted that the protective cap according to the present invention may be used in combination with vehicle wiper devices capable of absorbing impact which are known in the prior art. In such a solution, even greater dissipation of energy during impacting the vehicle wiper device by a road user is obtained. Additionally, since the present invention comprises only a cap mounted directly to the extremity of the pivot shaft, the cap has simple construction and is easy to manufacture.

Preferably, the dissipating means are made of brittle material so that the dissipating means are damaged during applying external forces to the protective cap.

Since a course of a road accident is highly unpredictable, a road user may hit into the protective cap at any angle. The dissipating means made of brittle material have an advantage of dissipation of energy regardless of a direction of acting an impacting force. It means that when a road user hits into the protective cap at an angle, the protective cap is still able to dissipate energy deriving from the impacting force. Further, on the basis of selection of a brittle material and shape of the dissipating means it is possible to adjust a predetermined value of the impacting force at which the dissipating means are being damaged. The predetermined value of the impacting force is defined during road accident tests. Therefore, when the predetermined value of the impacting force is obtained the dissipating means are being damaged and dissipate the energy deriving from the impact during a road accident. Thus, a higher safety of a road user is obtained.

Preferably, the brittle material is ceramic. Using ceramic for manufacturing the dissipating means is particularly advantageous since ceramic is highly brittle. Under the influence of action of an impacting force having a predetermined value, e.g. hitting by a head during a road accident, the dissipating means are being damaged. Therefore, a desired dissipation of energy is obtained.

Preferably, the protective cap is permanently mounted to the extremity of the pivot shaft.

Since protective caps are designed to ensure a safety of road users during a road accident it is important to provide the protective cap always firmly mounted to the pivot shaft. Permanently mounting of the protective cap ensures that the protective cap cannot be accidentally disconnected from the pivot shaft, e.g. during cleaning of the vehicle. Therefore, due to the permanently mounting the protective cap rests in a desired position and is able to dissipate energy during a road accident in a reliable manner.

Preferably, the protective cap is mounted to the extremity of the pivot shaft by adhesive.

Mounting of the protective cap using adhesive does not require any additional coupling elements, e.g. screws. Adhesive bonding does not require any additional manufacturing processes of the protective cap and the pivot shaft, e.g. boring a hole or cutting a thread. Therefore, mounting of the protective cap using adhesive contributes to a reduction of costs of a vehicle wiper device assembly process. Furthermore, mounting by means of adhesive is fast and easy. Thus, duration of a vehicle wiper device assembly process can be also reduced.

Preferably, the protective cap is detachably mounted to the extremity of the pivot shaft. When the protective cap is detachably mounted, the protective cap which was previously used may be replaced with a new one after a road accident. Moreover, the protective cap may be sold as additional equipment to the vehicle wiper devices.

Preferably, the protective cap is mounted to the extremity of the pivot shaft by a threaded connection. The threaded connection as such is very common, thus the connection which is simple to produce is provided. Moreover, if a wiper arm is mounted to a pivot shaft using a nut, a thread arranged on the pivot shaft engaging with the nut may be also used for screwing the protective cap onto the shaft. The threaded connection ensures a durable and stable connection in the same time.

Preferably, the dissipating means are constituted by a threaded connection such that the threaded connection is damaged during applying external forces to the protective cap.

When the dissipating means are constituted by the threaded connection between the protective cap and the pivot shaft, said threaded connection functions as mounting means and dissipating means at the same time. Therefore, a complexity of construction of the protective cap is further reduced and manufacturing of the protective cap is easier and cheaper. Further, on the basis of selection of a material and pitch of the threaded connection it is possible to adjust a predetermined value of an impacting force at which the dissipating means are being damaged.

Preferably, the protective cap is provided with a secondary dissipating means arranged on the external surface of the protective cap.

The secondary dissipating means are able to dissipate energy in addition to the dissipating means during applying of external forces. Therefore, the secondary dissipating means increase amount of energy which the protective cap is able to dissipate. Increasing of energy dissipation during a road accident causes that a lower probability of a deep injury of a road user during a road accident is obtained. Thus, further increase of a safety of a road user is achieved.

Preferably, the secondary dissipating means are constituted by a contact element. The contact element arranged on the external surface of the protective cap receives external forces acting on the protective cap during a road accident.

Preferably, the contact element is made of plastic. Manufacturing of the contact element from plastic is easy and cheap. Additionally, a wide variety of plastic material can be used to manufacture the contact element such that the contact element will have high elasticity and will characterize with good damping properties. Therefore, the contact element made of plastic contributes to dissipation of energy during impact, enhancing a safety of a road user.

Preferably, the contact element is made of elastic material. As described above, the contact element made of elastic material, such as rubber, characterizes with a proper elasticity and good damping properties. It is particularly advantageous since it further reduces a risk of deep injuries of a road user during a road accident.

Preferably, the contact element has rounded external shape. It should be understood that any sharp edges are particularly dangerous during a road accident since they cause deep injuries, e.g. skin cuts, of a road user. Therefore, a possibility of deep injury, e.g. deep skin cuts, of a road user when a road user hits the protective cap is significantly reduced. Therefore, the contact element enhances safety of a road user during a road accident.

According to another aspect, the invention relates to a vehicle wiper device comprising the protective cap as previously disclosed.

### BRIEF DESCRIPTION OF FIGURES

The present invention is described in greater details with reference to the accompanying figures, in which:
Fig. 1 is a general view of the vehicle wiper device provided with a protective cap according to the invention;
Fig. 2 is a side view of a protective cap mounted to an extremity of a pivot shaft according to the first embodiment of the present invention, wherein the cap is presented in a cross-section;
Fig. 3 is a side view of the protective cap of fig. 1 after application of external forces to the protective cap, wherein the cap is presented in a cross-section;
Fig. 4a is a perspective view of the first embodiment of the cap shown of Fig. 2, wherein the cap is presented in a cross-section;
Fig. 4b is a perspective view of second variant of the first embodiment shown on Fig. 2, wherein the cap is presented in a cross-section;
Fig. 4c is a perspective view of third variant of the first embodiment shown on Fig. 2, wherein the cap is presented in a cross-section;
Fig. 5 is a side view of a protective cap mounted to the extremity of the pivot shaft according to the second embodiment of the present invention, wherein the cap is presented in a cross-section;
Fig. 5a is an enlarged view of a dissipating means of the cap shown on Fig. 5, , wherein the cap is presented in a cross-section;
Fig. 6 is a side view of the protective cap of Fig. 6 after application of external forces to the protective cap , wherein the cap is presented in a cross-section;
Fig. 6a is an enlarged view of dissipating means of the cap shown on Fig. 6 after application of external forces to the protective cap, wherein the cap is presented in a cross-section;
Fig. 7 is a side view of a protective cap mounted to an extremity of a pivot shaft according to the third embodiment of the present invention , wherein the cap is presented in a cross-section
Fig. 8 is a side view of the protective cap of fig. 8 after application of external forces to the protective cap, wherein the cap is presented in a cross-section.

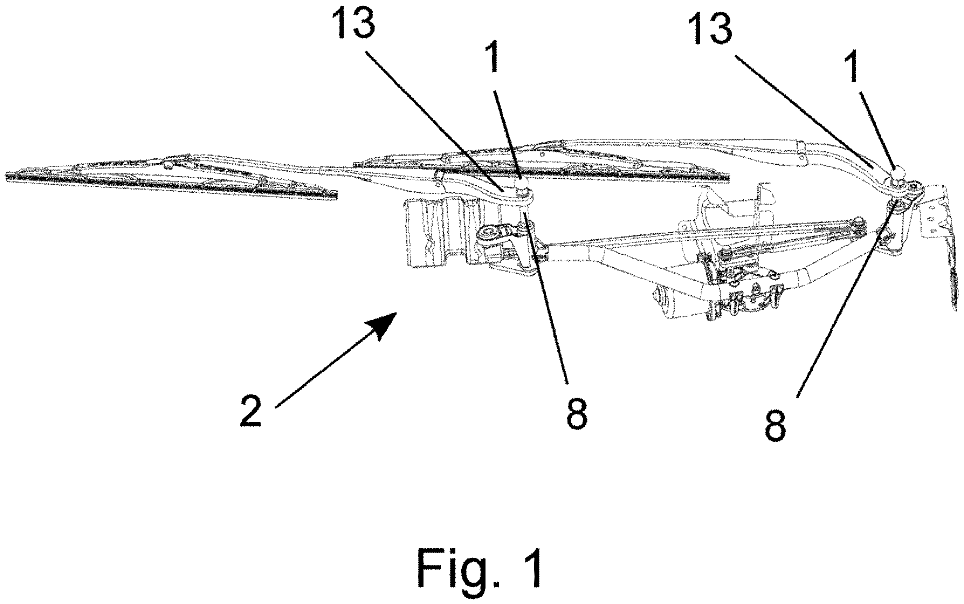

Fig. 1 shows a protective cap 1 according to the invention when mounted to an extremity of a pivot shaft 8 of a vehicle wiper device 2. On the pivot shaft 8 an arm head of a wiper arm 13 is arranged.

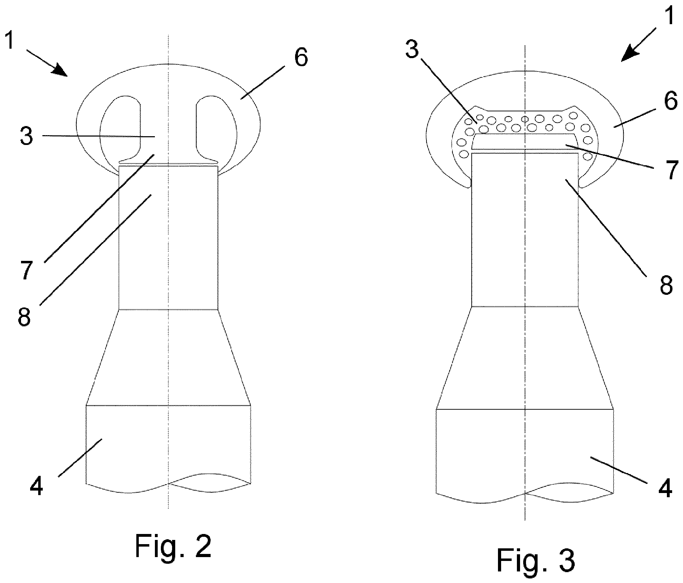

Fig. 2 shows in enlarged view, a protective cap 1 before external forces are applied to the protective cap 1 according to the first embodiment of the present invention. In this embodiment a dissipating means 3 in a form of a stem made of brittle material. The brittle material is preferably ceramic. The protective cap 1 comprises an outer rounded portion 6. Further, the protective cap 1 comprises a bottom portion 7. The stem has preferably a cylindrical shape. The stem connects the outer rounded portion 6 with the bottom portion 7. In Fig. 2 an end portion of the pivot shaft 4 is also presented. The end portion of the pivot shaft 4 comprises an extremity 8 of the pivot shaft 4. The bottom portion 7 of the protective cap 1 is permanently mounted to the extremity 8 of the pivot shaft 4. In this preferred embodiment the bottom portion 7 is mounted to the extremity 8 of the pivot shaft 4 by means of adhesive. Permanently mounting may also include welding (not shown) the protective cap 1 to the extremity 8 of the pivot shaft 4.

When external forces having a predetermined value are applied to the protective cap 1, for example during hitting by a road user in a road accident, the outer rounded portion 6 receives the external forces. Then, due to a concentration of high stress in the stem, the stem is damaged. Damaging of the stem may include crushing of the stem, what is presented in fig. 3. Due to damaging of the stem, a force acting on a road user during a road accident is significantly reduced. Thus, damaging of the dissipating means 3 constituted by the stem provides dissipation of energy during application of external forces to the protective cap 1.

In another preferred embodiment the outer rounded portion 6 and the stem are made of different materials. For example, the stem is made of ceramic and the outer rounded portion 6 is made of elastic material. The elastic material includes rubber. The outer rounded portion 6 made of rubber ensures further dissipation of energy and enhances safety of a road user during a road accident. Preferably, the outer rounded portion 6 and the stem are joined with each other by means of adhesive.

It should be understood that a predetermined value of an external force at which energy is dissipated, i.e. at which the dissipating means 3 are being damaged depends on a shape and material of the dissipating means 3. In this preferred embodiment, the dissipating means 3 are formed as a cylindrical stem. Therefore, a predetermined value of an external force may be varied by selecting a diameter of the cylindrical stem.

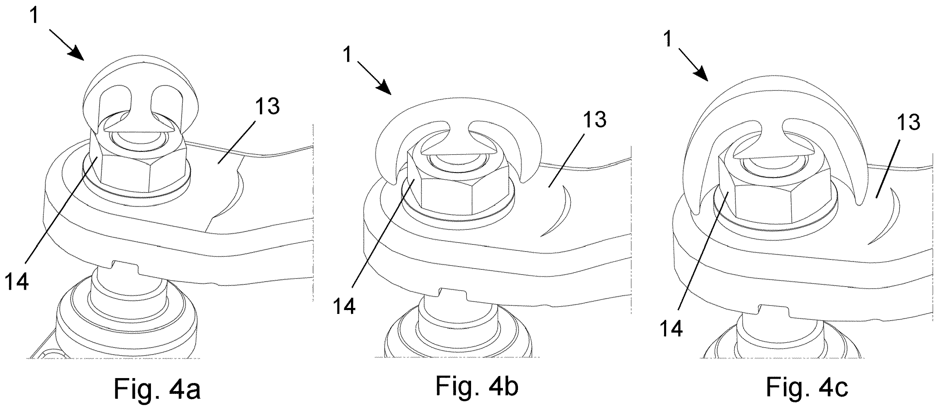

Fig. 4a shows a perspective view of the protective cap 1 shown on Fig. 2. In this embodiment lower end of the rounded portion 6 is arranged substantially at the same level as the bottom portion 7 of the cap 1. Second and third variant of the first embodiment shown on fig. 4b and fig. 4c have features of first variant shown on Fig. 4a, and have additionally downwardly extended rounded portion 6. The downwardly extended rounded means that the lower end of the rounded portion 6 is arranged below bottom portion 7 of the protective cap 1 when no external forces acts on the protective 1 cap. Since the lower end of the rounded portion 6 is arranged below the bottom portion 7 of the cap 1, the rounded portion 6 covers not only extremity of the pivot shaft 8 but also at least part of length the shaft 8, here the shaft 8 with a nut 15. Third variant of the first embodiment is shown on Fig. 4c. The protective cap 1 shown on Fig. 4c is provided with downwardly extended rounded portion 6 which is even longer than extended rounded portion 6 shown on Fig. 4b. This means that the lower end of the rounded portion 6 is arranged much more below bottom portion 7 of the protective cap 1 when no external forces acts on the protective cap 1. In this variant the protective cap 1 covers substantially whole nut 15 arranged on the shaft 8. Downwardly extended rounded portion provides better coverage of sharp edges of the wiper device, since the cap covers not only extremity of the shaft, but also other elements potentially harmful for road user. Thus, downwardly extended rounded portion of the cap further increase safety of road user.

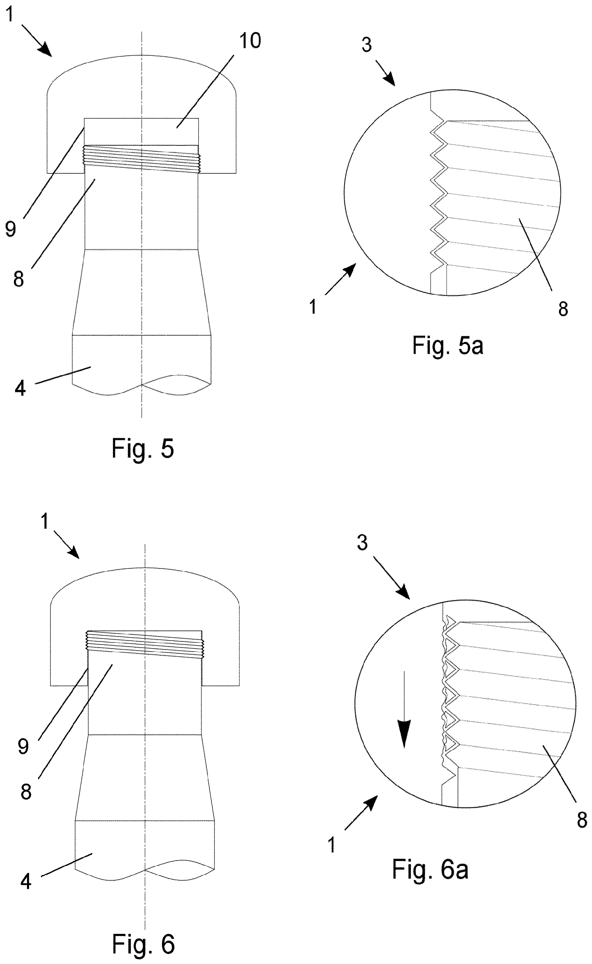

Fig. 5 presents a protective cap 1 according to the second embodiment of the present invention. The protective cap 1 comprises a blind hole 9 at one end thereof for receiving an extremity 8 of a pivot shaft 4. An internal thread is provided on a lateral surface of the blind hole 9. A corresponding external thread is provided on the extremity 8 of the pivot shaft 4. Mounting of the protective cap 1 is carried out by means of screwing the protective cap 1 onto the extremity 8 of the pivot shaft 4. After mounting the protective cap 1, the dissipating means 3 are constituted by a threaded connection between the protective cap 1 and the extremity 8 of the pivot shaft 4. An enlarged view of the threaded connection is presented in fig. 5a. It should be noted that the internal thread of the blind hole 9 and the external thread of the extremity 8 are positioned such that before applying a force to the cap, a void space 10 between the extremity 8 and a bottom surface of the blind hole 9 is provided.

In this preferred embodiment, when external forces having a predetermined value are applied to the protective cap 1, the threaded connection is being damaged, e.g. by shearing of a thread. During damage of the threaded connection, the protective cap 1 is moved down such that the extremity 8 of the pivot shaft 4 enters the void space 10 of the protective cap 1. Therefore, the void space 10 ensures that damaging of the threaded connection is possible and thereby energy is dissipated by the protective cap 1. The protective cap 1 after damage of the threaded connection is presented in fig. 6.

It should be understood that the dissipating means of the protective cap 1 is made of material which ensures that while an external force having a predetermined value is applied to the protective cap 1, the internal thread is damaged, for example by shearing of the thread. Said material comprises metal or plastic. Also a pitch of the internal and external thread is adjusted in order to ensure a damage of the threaded connection when an external force having a predetermined value is applied to the protective cap 1.

Fig. 6a is an enlarged view of a damage area, more specifically a shear area, of the threaded connection after damaging the threaded connection of fig. 6. As it can be seen the protective cap 1 is being moved down, as indicated by an arrow, while the threaded connection is being sheared. Therefore, energy is dissipated by means of damaging, in this example shearing, the threaded connection.

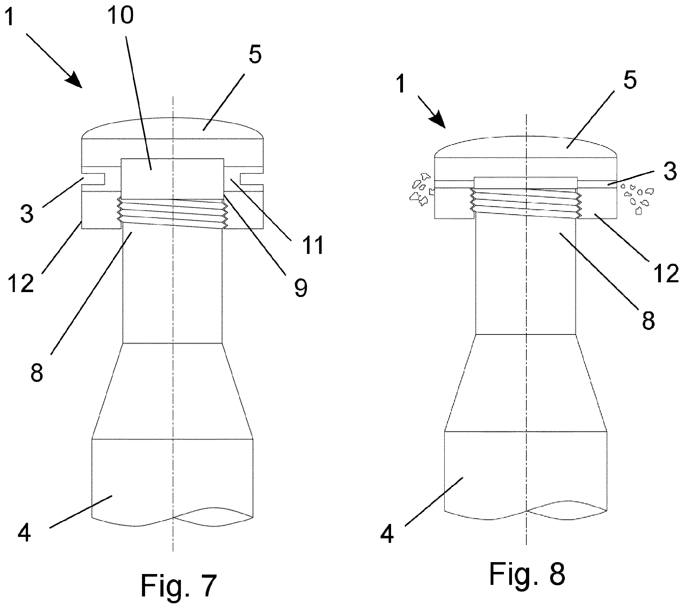

The third embodiment of the present invention is presented in fig 7. A protective cap 1 comprises dissipating means 3 which are made of brittle material. The brittle material is preferably ceramic. The dissipating means comprise a narrow portion 11. Further, the protective cap 1 comprises secondary dissipating means 5. The secondary dissipating means 5. The secondary dissipating means 5 have rounded external shape and the secondary dissipating means 5 are coupled with the dissipating means 3 as shown on fig. 7 and Fig. 8. The protective cap 1 comprises also a mounting portion 12 coupled with the dissipating means 3. There is provided a blind hole 9 in the protective cap 1 which extends through the mounting portion 12 and the dissipating means 3 terminates in the secondary dissipating means 5. Moreover, an internal thread is provided on a lateral surface of the blind hole 9 . Preferably, the internal thread is provided on a lateral surface of a section of the blind hole 9 provided in the mounting portion 12. A corresponding external thread is provided at an extremity 8 of a pivot shaft 4. In this preferred embodiment the protective cap 1 is mounted to the extremity 8 of the pivot shaft 4 by means of screwing the protective cap 1 onto the threaded extremity 8 of the pivot shaft 4. After mounting, a void space 10 is provided between the extremity 8 of the pivot shaft 4 and a bottom surface of the blind hole 9.

Fig. 8 presents the third embodiment of the present invention after application of an external force to the protective cap 1. When the secondary dissipating means 5 receive an external force having a predetermined value, a stress appears in the protective cap 1. A concentration of stress appears in the narrow portion 11 of the dissipating means 3. Due to concentration of stress, the narrow portion 11 is damaged, e.g. by crushing. Damaging of the dissipating means 3 provides dissipation of energy deriving from application of external forces. It should be noted that by selecting a diameter of the narrow portion 11, a predetermined value of an external force at which the dissipating means 3 are damaged and energy is dissipated may be varied.

Preferably, the secondary dissipating means 5 are constituted by a contact element for receiving an external force. The contact element is made of elastic material, e.g. rubber. Due to elasticity and damping properties of the elastic material, the secondary dissipating means 5 ensure additional dissipation of energy. Therefore, the secondary dissipating means 5 enhance the total dissipation of energy of the protective cap 1. Furthermore, rounded outer shape of the secondary dissipating means 5 prevents a road user from being injured by sharp edges of the vehicle wiper device. Therefore, the secondary dissipating means 5 improve a safety of a road user during a road accident.

The described invention is susceptible of numerous modifications and variations, all of which are within the scope of the appended claims. The inventive features as disclosed herein may be combined with each other without departing from the scope of the invention. All the details may further be replaced with other technically equivalent elements. Therefore, the present invention is not limited by the specific disclosure herein.

### LIST OF REFERENCE NUMBERS

(1) protective cap
(2) vehicle wiper device
(3) dissipating means
(4) pivot shaft
(5) secondary dissipating means
(6) outer rounded portion
(7) bottom portion
(8) extremity of the pivot shaft
(9) blind hole of the protective cap
(10) void space
(11) narrow portion
(12) mounting portion
(13) wiper arm
(14) nut

## Claims

1. A protective cap (1) for a vehicle wiper device (2), the protective cap (1) comprising dissipating means (3) for dissipation of energy during applying external forces to the protective cap (1), **characterized in that** the protective cap (1) is configured to be directly mounted to the extremity (8) of a pivot shaft (4).

2. A protective cap (1) according to claim 1, **characterized in that** the dissipating means (3) are made of brittle material so that the dissipating means (3) are damaged during applying external forces to the protective cap (1).

3. A protective cap (1) according to claim 2, **characterized in that** the brittle material is ceramic.

4. A protective cap (1) according to claims 1-3, **characterized in that** the protective cap (1) is permanently mounted to the extremity (8) of the pivot shaft (4).

5. A protective cap (1) according to claim 4, **characterized in that** the protective cap (1) is mounted to the extremity (8) of the pivot shaft (4) by adhesive.

6. A protective cap (1) according to claims 1-3, **characterized in that** the protective cap (1) is detachably mounted to the extremity (8) of the pivot shaft (4).

7. A protective cap (1) according to claim 6, **characterized in that** the protective cap (1) is mounted to the extremity (8) of the pivot shaft (4) by a threaded connection.

8. A protective cap (1) according to claims 1 and 6-7, **characterized in that** the dissipating means (3) are constituted by a threaded connection such that the threaded connection is damaged during applying external forces to the protective cap (1).

9. A protective cap (1) according to any of the claims 1-8, **characterized in that** the protective cap (1) is further provided with secondary dissipating means (5) arranged on the external surface of the protective cap (1).

10. A protective cap (1) according to claim 9, **characterized in that** the secondary dissipating means (5) are constituted by a contact element.

11. A protective cap (1) according to claim 10, **characterized in that** the contact element is made of plastic.

12. A protective cap (1) according to claim 10, **characterized in that** the contact element is made of elastic material.

13. A protective cap (1) according to claims 10-12, **characterized in that** the contact element has rounded external shape.

14. A vehicle wiper device (2) **characterized in that** the vehicle wiper device (2) comprises the protective cap (1) according to any of the claims 1-13.
